(19) Europäisches Patentamt / European Patent Office / Office européen des brevets

(11) **EP 4 428 509 A1**

(12) **EUROPEAN PATENT APPLICATION**

(43) Date of publication:
**11.09.2024   Bulletin 2024/37**

(21) Application number: **23160204.6**

(22) Date of filing: **06.03.2023**

(51) International Patent Classification (IPC):
**G01J 9/00** (2006.01)        **G01J 9/02** (2006.01)

(52) Cooperative Patent Classification (CPC):
**G01J 9/00; G01J 9/0215;** G01J 2009/0223;
G01J 2009/0234

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ludwig-Maximilians-Universität
München
80539 München (DE)**

(72) Inventors:
• **DÖPP, Andreas
  85748 Garching (DE)**
• **HOWARD, Sunny
  Oxford OX1 3PU (GB)**
• **NORREYS, Peter
  Oxford OX1 3PU (GB)**

(74) Representative: **v. Bezold & Partner Patentanwälte
- PartG mbB
Ridlerstraße 57
80339 München (DE)**

(54) **WAVEFRONT MEASURING APPARATUS AND WAVEFRONT MEASURING METHOD FOR SENSING A LIGHT FIELD AND RECONSTRUCTING A WAVEFRONT THEREOF**

(57)     A wavefront measuring apparatus 100 for sensing a light field 1, in particular of laser pulses, travelling along an optical axis (z) and having a lateral extension parallel to an optical plane (x-y) perpendicular to the optical axis, and for reconstructing a wavefront of the light field 1 with spatial and spectral resolution in the optical plane, comprises a wavefront encoding device 10 for receiving the light field 1 to be measured and for creating a hypercube 2 of light patterns encoding a phase of the wavefront by an intensity modulation in the optical plane and having spectral resolution within said optical plane, a wavefront sensing device 20 for capturing three dimensional wavefront data by single shot compressive imaging of the hypercube 2 of light patterns with a two dimensional light sensor 23, and a wavefront reconstructing device 30 for a neural network, in particular deep unrolling, based reconstruction of the wavefront of the light field 1 from the wavefront data. Furthermore, a wavefront measuring method and applications of measuring the wavefront are disclosed.

FIG. 1

EP 4 428 509 A1

**Description**

Field of the invention

The invention relates to a wavefront measuring apparatus and to a wavefront measuring method for sensing a light field and for reconstructing a wavefront of the light field with spatial and spectral resolution. Applications of the invention are available e. g., in the fields of characterizing and/or controlling ultrashort laser pulses, and/or quantitative phase imaging.

Technical background

In the present specification, reference is made to the following prior art illustrating technical background of the invention and related techniques:

[1] S. Jolly et al. "Spatio-temporal characterization of ultrashort laser beams: a tutorial" in Journal of Optics, vol. 22, 08 2020;
[2] A. Jeandet et al. "Survey of spatio-temporal couplings throughout high-power ultrashort lasers" Opt. Express, vol. 30, pp. 3262-3288, Jan 2022;
[3] C. Bourassin-Bouchet et al. "Duration of ultrashort pulses in the presence of spatio-temporal coupling" Opt. Express, vol. 19, pp. 17357-17371, Aug 2011;
[4] D. H. Froula et al. "Flying focus: Spatial and temporal control of intensity for laser-based applications" Physics of Plasmas, vol. 26, no. 3, p. 032109, 2019;
[5] C. Caizergues et al. "Phase-locked laser-wakefield electron acceleration" Nature Photon., vol. 14, no. 8, pp. 475-479, 2020;
[6] R. Aboushelbaya "Orbital angular momentum in high-intensity laser interactions" Thesis, University of Oxford, 2020;
[7] P. Bowlan et al. "Crossed-beam spectral interferometry: a simple, high-spectral-resolution method for completely characterizing complex ultrashort pulses in real time" Opt. Express, vol. 14, pp. 11892-11900, Nov 2006;
[8] M. Lopez-Ripa et al. "Bulk lateral shearing interferometry for spatiotemporal study of time-varying ultrashort optical vortices" Photon. Res., vol. 10, pp. 922-931, Apr 2022;
[9] S. L. Cousin et al. "Three-dimensional spatiotemporal pulse characterization with an acousto-optic pulse shaper and a hartmann shack wavefront sensor" Opt. Lett., vol. 37, pp. 3291-3293, Aug 2012;
[10] G. Pariente et al. "Space-time characterization of ultra-intense femtosecond laser beams" Nature Photonics, vol. 10, pp. 547-553, 2016;
[11] P. Gabolde et al. "Single-shot measurement of the full spatio-temporal field of ultrashort pulses with multi-spectral digital holography" Opt. Express, vol. 14, pp. 11460-11467, Nov 2006;
[12] A. Borot et al. "Spatio-spectral metrology at focus of ultrashort lasers: a phase-retrieval approach" Opt. Express, vol. 26, pp. 26444-26461, Oct 2018;
[13] W. P. Leemans "Bella laser and operations" Proceedings of PAC2013, Pasadena, CA USA THYAA1, 2013;
[14] A. Jeandet et al. "Spatio-temporal structure of a petawatt femtosecond laser beam" Journal of Physics: Photonics, vol. 1, p. 035001, June 2019;
[15] R. W. Gerchberg "A practical algorithm for the determination of phase from image and diffraction plane pictures" Optik, vol. 35, pp. 237-246, 1972.
[16] E. Grace et al. "Complete, single shot, spatiotemporal measurement of a terawatt laser system" Frontiers in Optics / Laser Science, p. LW5G.5, 2020;
[17] Z. Guang et al. "Complete characterization of a spatiotemporally complex pulse by an improved single-frame pulse-measurement technique" J. Opt. Soc. Am. B, vol. 31, pp. 2736-2743, Nov 2014; and
[18] A. S. Machikhin et al. in "J. Opt." 19 075301, 2017; and C. Ba et al. "Fast hyperspectral phase and amplitude imaging in scattering tissue" Opt. Lett. 43, 2058-2061, 2018;
[19] S. Velghe et al. "Wave-front reconstruction from multidirectional phase derivatives generated by multilateral shearing interferometers" Opt. Lett., vol. 30, pp. 245-247, Feb 2005;
[20] S. Velghe et al. "Advanced wavefront sensing by quadri-wave lateral shearing interferometry" Proc. SPIE vol. 6292, pp. 117 - 129, 2006;
[21] E. J. Candes "The restricted isometry property and its implications for compressed sensing" Comptes rendus mathematique, vol. 346, no. 9-10, pp. 589-592, 2008;
[22] M. E. Gehm et al. "Single-shot compressive spectral imaging with a dual-disperser architecture" Opt. Express, vol. 15, pp. 14013-14027, Oct 2007;
[23] A. Wagadarikar et al. "Single disperser design for coded aperture snapshot spectral imaging" Appl. Opt., vol.

47, pp. B44-B51, Apr 2008;

[24] L. Hu et al. "Learning-based shack-hartmann wavefront sensor for high-order aberration detection" Opt. Express, vol. 27, pp. 33504-33517, Nov 2019;

[25] L. Hu et al. "Deep learning assisted shack-hartmann wavefront sensor for direct wave-front detection," Opt. Lett., vol. 45, pp. 3741-3744, July 2020;

[26] X. Yuan et al. "Snapshot compressive imaging: Principle, implementation, theory, algorithms and applications," ArXiv, vol. abs/2103.04421, 2021;

[27] Z. Wu et al. "Dense deep unfolding network with 3d-cnn prior for snapshot compressive imaging" arXiv:2109.06548, 2021;

[28] Z. Zhang et al. "Road extraction by deep residual u-net" IEEE Geoscience and Remote Sensing Letters, vol. 15, pp. 749-753, May 2018;

[29] L. Wang et al. "Hyperspectral image reconstruction using a deep spatial-spectral prior" IEEE Xplore, pp. 8024-8033, 2019;

[30] F. Chollet "Xception: Deep learning with depthwise separable convolutions" arXiv:1610.02357, 2016;

[31] A. F. Agarap "Deep learning using rectified linear units (ReLu)" arXiv:1803.08375, 2018;

[32] L. Wang et al. "Dnu: Deep non-local unrolling for computational spectral imaging" IEEE Xplore, June 2020;

[33] C. Oh et al. "Achromatic diffraction from polarization gratings with high efficiency" Optics letters 33, 20, pp. 2287-2289, 2008; and

[34] R. Liu et al. "An intriguing failing of convolutional neural networks and the coordconv solution" Advances in neural information processing systems 32nd Conference on Neural Information Processing System, 2018.

Ultrashort laser pulses generally comprise electro-magnetic light fields having a characteristic spatial and temporal profile and necessarily possessing broad spectral bandwidth [1]. The chromatic properties of optical elements that are used for generation or application of such pulses can create relations between the spatial and temporal profiles, called spatio-temporal couplings (STCs) [2]. These phenomena can lead to a variety of effects including, for example, the broadening of a focused laser pulse either spatially or temporally, thereby reducing the peak intensity thereof [3]. Deliberately introduced STCs can lead to exotic light pulses, like pulses with the socalled flying focus [4] with its potential application in laser-driven wakefield accelerators [5] or orbital angular momentum beams [6]. Generally, the expansion in the applications of ultrafast laser pulses has exacerbated the need for a robust way to measure their properties.

To resolve STCs, wavefront information over a three-dimensional hypercube (x, y, t) or equivalently its spatio-spectral analogue (x, y, $\omega$) is needed. Due to the limitation that array light sensors (such as CMOS cameras) capture information in a maximum of two dimensions, the majority of current techniques resort to scanning over one or two dimensions, e.g., with a spatial [7, 8], spectral [9] or temporal [10] scan. Such techniques are time consuming and are blind to shot-to-shot variations and drift of the laser source. While there exist some methods that are single-shot [11], i.e. those that capture the hypercube in one shot, these currently lack resolution, spectral range, and are cumbersome to implement and use on a routine basis.

Existing techniques of wavefront characterization of ultrashort laser pulses comprise the methods called INSIGHT [12], as recently used to characterize the BELLA (1.1 PW, 40 fs) laser at Berkeley [13], [14], and STRIPED-FISH [11].

The INSIGHT method involves a temporal scan, wherein a Michelson interferometer is used to measure an auto-correlation function of the laser pulse. Practically this means scanning through a number of relative temporal delays between a pulse and its copy. One uses multiple sensors to measure the spatial intensity of the resulting interferogram in a number of separate planes close to the far field. Via the Fourier transform and the use of a filtering algorithm, one can isolate the modulated term corresponding the interference between the pulses. The spatial-spectral intensity of the field is extracted by demodulation. As this information is obtained in multiple planes, a Gerchberg-Saxton algorithm [15] can be used to retrieve the phase of the pulse.

Although the INSIGHT method captures most spatial features, mostly limited by the dynamic range of the sensor used in focus, and with sufficient scanning, high spectral resolution, it is blind to shot-to-shot fluctuations. As a further substantial disadvantage, the scanning also means it is not suitable for experiments which cannot be easily repeated, such as those with exotic beams or plasma interactions. Furthermore, high precision measurements with INSIGHT take thousands of shots. Many high-intensity lasers operate at repetition rates of one Hertz or lower, yielding typical measurement times of tens of minutes (not including the time required to set up and calibrate the relatively complex equipment). Not only can fluctuations within this time frame render the entire measurement useless, but it also practically removes the possibility of feedback-based optimization of the laser.

These limitations highlight the importance of a single-shot technique. The best known techniques to address this problem are based on the STRIPED-FISH method [11] executed as follows. A beam to be characterized is passed through a diffractive grating along with a known reference pulse, wherein both beams of pulses are at an angle relative to each other. This creates a 2D array of copies of the interference pattern between the two pulses. This array then passes through an interference bandpass filter. Crucially this filter is tilted with respect to the direction of propagation (z axis), such that, depending on a coordinate of the copy perpendicular to the z axis, a different wavelength will be transmitted and captured onto a light sensor. An additional rotation between the diffractive grating and the filter relative to the z axis is added, as this removes the spectral redundancy that would be created by straight lines of copies, and thus allows for a greater spectral resolution. The reconstruction consists of a Fourier filtering algorithm to demodulate each interferogram, before the different spectral channels are stacked.

The STRIPED-FISH method has recently been used to characterize lasers with intensities above 0.1 TW [16]. Although single-shot, this technique contains a number of important limitations. First, a reference beam must be used, which is created from a spatially filtered copy of the original beam in a separate arm of a Michelson interferometer. This leads to a cumbersome experimental setup, which also requires calibration for each spectral channel. As a result, the STRIPED-FISH method has been applied in practice by the authors of [16] only. Furthermore, the separation of spectral components spatially represents a fundamental compromise in spatial and spectral resolution, and so this device has far worse resolution than the INSIGHT method. Even more problematic is that the interference bandpass filter is only effective over a certain wavelength range, limiting this method to a spectral range of about 50 nm [17]. Higher intensity - and therefore shorter - pulses possess a broader spectral bandwidth, and consequentially this method cannot yet be used for most modern ultrashort lasers.

In summary, the existing techniques of characterization of ultrashort laser pulses have substantial limitations, so that no method that is practical enough to be commonly used, e.g., at laser facilities. In particular, as any method is restricted to a two-dimensional light sensor on which information can be captured, one is forced to choose between two options: scan through the third dimension, or compress the 3 dimensional information onto the sensor (single-shot technique). The main drawbacks of the scanning technique are time consumption, unsuitability for single shot characterization and unsuitability for use in a feedback control of the laser source. On the other hand, single-shot technique suffer from a complex experimental configuration and low spatial and/or spectral resolution.

The above problems do not occur in the characterization of laser pulses only, but even more reconstructing wavefront information from temporally-incoherent light, as needed e.g., in spectrally-resolved quantitative phase imaging (see e.g., [18]).

Objective of the invention

It is an objective of the invention to provide an improved wavefront measuring apparatus and/or wavefront measuring method, being capable of avoiding limitations and disadvantages of conventional techniques. In particular, measuring the wavefront of a light field is to be provided with single-shot measurement capability, reduced measuring time, improved spatial and/or spectral resolution (in particular compared with conventional single-shot measurements), reduced experimental complexity, reduced adjustment expense and/or extended practical applications.

Summary of the invention

These objectives are solved by a wavefront measuring apparatus and/or wavefront measuring method comprising the features of the independent claims. Advantageous embodiments and applications of the invention are defined in the dependent claims.

According to a first general aspect of the invention, the above objective is solved by a wavefront measuring apparatus (Hyperspectral Compressive Wavefront Sensor), being configured for sensing a light field, in particular of laser pulses, travelling along an optical axis (z) and having a lateral extension parallel to an optical plane (x-y) perpendicular to the optical axis, and for reconstructing a wavefront of the light field with spatial and spectral resolution in the optical plane.

The wavefront measuring apparatus of the invention comprises a wavefront encoding device being configured for receiving the light field to be measured and for creating a hypercube of light patterns encoding a phase of the wavefront by an intensity modulation in the optical plane and having spectral resolution within said optical plane. Encoding a phase of the wavefront includes mapping local phases of the wavefront to intensities of the light patterns in the hypercube of light patterns. The phase information of the wavefront is included with spatial resolution in the hypercube of light patterns.

Furthermore, the wavefront measuring apparatus of the invention comprises a wavefront sensing device being configured for capturing three dimensional wavefront data by single shot compressive imaging (SCI) of the hypercube of light patterns with a two dimensional light sensor.

The wavefront sensing device preferably is arranged downstream from the wavefront encoding device for receiving the hypercube of light patterns. The light sensor may be any sensor being arranged for receiving the hypercube of light patterns and creating a two-dimensional sensor output, which represents the three dimensional wavefront data included in the hypercube of light patterns, like e.g., a two-dimensional CCD sensor or a CMOS sensor.

Furthermore, the wavefront measuring apparatus of the invention comprises a wavefront reconstructing device being configured for a neural network based reconstruction of the wavefront of the light field from the wavefront data. The neural network based reconstruction preferably includes the application of at least one deep learning neural network on the three dimensional wavefront data captured with the wavefront sensing device.

According to a second general aspect of the invention, the above objective is solved by a wavefront measuring method for sensing a light field, in particular of laser pulses, travelling along an optical axis (z) and having a lateral extension parallel to an optical plane (x-y) perpendicular to the optical axis, and for reconstructing a wavefront of the light field with spatial and spectral resolution in the optical plane, comprising the steps of receiving the light field to be measured and creating a hypercube of light patterns encoding a phase of the wavefront by an intensity modulation in the optical plane and having spectral resolution within said optical plane, capturing three dimensional wavefront data by single shot compressive imaging of the hypercube of light patterns, and reconstructing the wavefront of the light field from the wavefront data by a neural network, preferably deep learning neural network, based reconstruction process. Preferably, the wavefront measuring method or an embodiment thereof is executed with the wavefront measuring apparatus according to the first general aspect of the invention or an embodiment thereof.

According to a third general aspect of the invention, the above objective is solved by a method of using the wavefront measuring apparatus according to the first general aspect of the invention or an embodiment thereof or the wavefront measuring method according to the second general aspect of the invention or an embodiment thereof for diagnostic of ultrashort laser pulses, feedback-control of creating ultrashort laser pulses, and/or quantitative phase imaging.

A further independent subject of the invention is a laser apparatus comprising a laser source device being arranged for creating laser pulses and further comprising the wavefront measuring apparatus according to the first general aspect of the invention or an embodiment thereof. The wavefront measuring apparatus may be coupled with the laser source device for adjusting and/or loop controlling of creating the laser pulses and/or with an application site for characterizing the laser pulses at the application site, like a measuring apparatus or an accelerator apparatus.

The term "wavefront" refers to the local phases in a plane through the light field to be measured, in particular perpendicular to the propagation direction thereof. As mentioned above, the wavefront generally may be represented by wavefront information (local field amplitude and phase) over a three-dimensional hypercube (x, y, t) or (x, y, ω). Preferably, but not necessarily, the wavefront to be reconstructed may be represented by Zernike polynomials. As an alternative to Zernike polynomials, for example, principal component analysis (PCA) can be used for identifying the major components of the wavefront to be measured. Alternatively, one can use a neural network for the representation of the wavefront, like a latent space of an autoencoder network.

The "light field" preferably is a laser pulse, e. g. with a duration in a range from 5 fs to 1 ns, a center wavelength in a range from 400 nm to 2000 nm and a peak power of GWs or more. Alternatively, the light field may comprise another spatially-coherent light pulse, e.g., created by a mercury-vapor lamp. Depending on the light source used, the light field may be created as a single pulse, or the light field may be one of a sequence of pulses. In case of a sequence of pulses, integration would take place over all pulses occurring in an integration interval for creating the hypercube of light patterns. If a time interval between the individual pulses of a sequence of pulses is in the femto- to picosecond range, the pulse sequence would cause a spectral interference in the measurement of the wavefront, which can be taken into account in the final recovery of the wavefront. With longer time intervals, however, the spectral interference would be in the sub-nm range and would not be measurable.

The "hypercube of light patterns" encoding a phase of the wavefront by an intensity modulation in the optical plane and having spectral resolution within said optical plane refers to an encoded light field extending in the direction of propagation and perpendicular to the direction of propagation wherein intensity modulations within each optical plane perpendicular to the direction of propagation represent a distribution of local phases in the optical plane and different optical planes represent different spectral portions of the light field to be measured.

Advantageously, the invention combines techniques from different technical fields, including wavefront encoding, compressed sensing and deep learning, to provide a new approach for hyperspectral wavefront measurements. The hypercube of light patterns, like interferograms, obtained by wavefront encoding, comprise a set of image slices with spot patterns, which do not exhibit the same sparsity in e.g. the wavelet domain as most natural images used in known SCI applications or research. The inventors have found that it is nevertheless possible to recover the hypercube of light patterns.

As a particular advantage, the invention provides a single shot measurement, i.e., it is sufficient to receive one single pulse of the light field to be measured only and to create the hypercube of light patterns from the single pulse of the light field. For the same size of the light sensor, the invention can provide greater spatio-spectral resolution than any conventional technique. Furthermore, the application of the neural network based reconstruction drastically increases reconstruction speed, even allowing for (near) real-time reconstruction, e. g., within 1 s or less. In particular, the use of machine learning for reconstruction strongly speeds up both the compressed sensing and phase retrieval, allowing the real time measurement. Additionally, the experimental setup has substantially less complexity compared with conventional techniques and greatly facilitates the application as a diagnostic in practical laser systems.

Advantageously, wavefront encoding may be implemented in different ways with various devices for producing intensity modulations that encode the phase of the wavefront. According to a preferred embodiment of the invention, the wavefront encoding device may comprise a lateral shearing interferometer device or a point-diffraction interferometer device, and the light patterns in the encoding hypercube of light patterns comprise interferograms. Particularly preferred, the lateral shearing interferometer device may be configured as a quadriwave lateral shearing interferometer (QWLSI), which has advantages in terms of high resolution and reconstruction fidelity. Interferograms encoding the phase of the wavefront are preferred for measuring light fields from spatially coherent light sources, which comprise e.g., laser sources or spatially-filtered mercuryvapor lamps. As an alternative to the QWLSI, an LSI device may comprise a Hartmann mask, as described below, or a hexagonal phase lattice.

According to an alternative embodiment of the invention, the wavefront encoding device may comprise a Shack-Hartmann sensor device, and the light patterns comprise light spots created by the Shack-Hartmann sensor device. The term "Shack-Hartmann sensor device" refers to a microlens array being included in a conventional Shack-Hartmann wavefront sensor and being arranged for receiving the light field to be measured and creating the hypercube of light patterns. Advantageously, the Shack-Hartmann sensor device works also with incoherent light.

In terms of embodiments of the inventive method, the light patterns preferably may comprise interferograms created by a lateral shearing interferometer device or a point-diffraction interferometer device, or light spots created by a Shack-Hartmann sensor device.

According to a further preferred embodiment of the invention, the wavefront sensing device comprises a coded aperture spectral imaging device (coded aperture snapshot spectral imager, CASSI device), including a coded aperture, a dispersive medium and the light sensor, wherein the coded aperture comprises a random mask extending perpendicular within the optical plane and transmitting the hypercube of light patterns to the dispersive medium and the dispersive medium is arranged for spectrally dispersing the hypercube of light patterns onto the light sensor. While conventional hyperspectral sensors suffer from a trade-off problem between spectral and spatial resolution, the CASSI device advantageously may circumvents this problem by using the subsequent reconstruction method.

Thus, in terms of the method, the three dimensional wavefront data preferably may be captured with a CASSI device, including the coded aperture, the dispersive medium and the light sensor, wherein the coded aperture comprises the random mask extending perpendicular within the optical plane and transmitting the hypercube of light patterns to the dispersive medium and the dispersive medium spectrally disperses the hypercube of light patterns onto the light sensor.

Particularly preferred, once the phase is imprinted as an intensity modulation in the hypercube of light patterns, compressed hyperspectral sensing may be implemented using the random, coded mask. The random mask may be a binary random mask, comprising an array with a stochastic distribution of transmissive or opaque pixels. The mask may be imaged with imaging optics onto e.g., a 2-D array sensor (like a CMOS camera), particularly preferred using high-resolution 1:1 imaging in a 4f geometry. Within the Fourier plane of the imaging optics, the signal is dispersed with the dispersive medium.

According to an alternative advantageous embodiment of the invention, the wavefront sensing device comprises a dispersive medium and the light sensor, and the wavefront encoding device comprises a random Hartmann mask being preferably arranged with a tilt relative to a dispersion axis of the dispersive medium. The Hartmann mask is arranged for creating the hypercube of light patterns and transmitting it to the dispersive medium and the dispersive medium is arranged for spectrally dispersing the hypercube of light patterns onto the light sensor. Advantageously, this embodiment is characterized by replacing the CASSI device by a combination of the wavefront encoding and sensing devices. The function of the random mask in the CASSI device is fulfilled by the Hartmann mask, so that the complexity of the optical setup is reduced.

The inventors have found that, in particular for measuring laser pulses having a high power and less high-frequency components compared with imaging signals collected by compressive sensing in the past, employing the Hartmann mask is sufficient for encoding phase information of the light field to be measured. Particularly preferred, the Hartmann mask may be configured like the random mask of the CASSI device, i.e., with a stochastic distribution of transmissive pixels.

As a further alternative to employing the CASSI device, compressive sensing may be executed with another spectral modulation device, using e.g., interference filters.

While the random mask in the CASSI device or the Hartmann mask preferably may comprise a static transmission mask, modified embodiments may employ other masks, like e.g., a dynamically controllable mask, based on a liquid crystal (LC) matrix or a digital mirror device (DMD), and/or reflective masks, that are arranged for reflecting the light field to be measured and creating the hypercube of light patterns, in particular the sparse representation thereof. The dynamically controllable mask is configured for setting a predetermined mask pattern that is fixed during a wavefront measurement, in particular during collecting the sparse representation of the hypercube of light patterns. Accordingly, the dynamically controllable mask may have advantages in terms of an adaptability of the mask pattern to particular measuring conditions.

Preferably, the dispersive medium of the CASSI device may comprise a transmissive grating or a prism. The transmission grating has particular advantages as it allows imaging multiple copies of the same image with different dispersion on the same sensor, thus increasing reconstruction fidelity. As the transmission grating does not introduce material dispersion, imaging in the wavefront sensing device is not influenced by the grating. Advantages of prisms include the ability to custom shape the dispersion curve using compound prisms.

Optionally, the transmissive grating may comprise a transmissive polarization grating. Advantageously, with this embodiment, the inventive method is also sensitive to the polarization of the light field to be measured. In terms of the method, wavefronts separately can be measured for different polarization directions of the light field.

According to a further, particularly advantageous embodiment of the invention, the wavefront reconstructing device may be configured for reconstructing the wavefront of the light field from the wavefront data by reconstructing the hypercube of light patterns by applying a deep unrolling regularization on the wavefront data, and/or by reconstructing the wavefront of the light field from the reconstructed hypercube of light patterns by an application of at least one neural network on the reconstructed hypercube of light patterns. The hypercube of light patterns preferably is reconstructed from the wavefront data by numerically solving a minimization task, wherein a superposition of a data term and a regularization term is minimized. The data term represents the condition for matching the reconstructed hypercube to the captured coded shot. The regularization term is obtained by applying the deep unrolling network. Preferably, the deep unrolling regularization may be executed with a ResUNet network using 3D convolutional layers. Alternatively or additionally, the wavefront of the light field may be reconstructed by an application of a residual convolutional network, like e.g., an Xception-LSI network, on the reconstructed hypercube of light patterns.

Preferably, a two steps process is applied wherein firstly the process of reconstructing the hypercube of light patterns is executed by applying the deep unrolling regularization and secondly the process of reconstructing the wavefront of the light field from the reconstructed hypercube of light patterns is executed by applying the at least one neural network. Alternatively, another wavefront reconstruction may be applied, e.g., based on a least-square method, on the reconstructed hypercube of light patterns, or both steps can be conducted by a common neuronal network.

Optionally, a deconvolution with a spatially varying point spread function (PSF) of the wavefront encoding and/or sensing devices may be applied on the wavefront data collected with the light sensor. Advantageously, this deconvolution allows to increase the detector resolution of the light sensor.

Applying the ResUNet network has particular advantages in terms of the use of multi-scale convolutions across both the spectral and spatial domains. Alternatively, other networks can be applied, e.g., convolutional neural networks, variational convolutional networks, generative adversarial neural networks, recurrent neural networks, or transformer networks.

Advantageously, in particular with an application of the quadriwave lateral shearing interferometry, the wavefront reconstructing device may be configured for validating the reconstructed wavefront of the light field by using redundancy of phase information included in the hypercube of interferograms.

In summary, the present invention provides a novel way to combine snapshot compressive imaging and phase encoding, e.g., by lateral shearing interferometry, in order to capture the spatio-spectral phase of a light field, like an ultrashort laser pulse, in a single shot. A deep unrolling algorithm may be utilized for the snapshot compressive imaging reconstruction due to its parameter efficiency and superior speed relative to other methods, potentially allowing for online reconstruction. The algorithm's regularization term is represented using neural network with 3D convolutional layers, to exploit the spatio-spectral correlations that exist in light field wavefronts.

While compressed sensing is not typically applied to modulated signals, the inventors demonstrated its success for wavefront measurements for the first time. Furthermore, the inventors have found that a neural network successfully can be trained to predict the wavefronts from e.g., a lateral shearing interferogram in terms of Zernike polynomials, which again increases the speed of the technique without sacrificing fidelity.

By passing the network a hypercube of interferograms, rather than individual slices, it may be possible to exploit spectral correlations in order to improve accuracy and detect STCs more easily. Also, work can be done on testing the model with a more varied set of Zernike polynomials. Finally, there has been recent interest in the possibility of spreading phase contrast imaging to a hyperspectral setting. The proposed method would be able to collect information with higher spectral resolution in a single shot, allowing for dynamic events to be recorded hyperspectrally.

Brief description of the drawings

Further advantages and details of the invention are described in the following with reference to the attached drawings, which schematically show in:

Figure 1:    features of a wavefront measuring apparatus according to embodiments of the invention;

Figure 2:    features of a laser apparatus provided with a wavefront measuring apparatus according to embodiments of the invention;

Figure 3: an overview of a point-diffraction interferometer device;

Figures 4A to 4D: illustrations of wavefront reconstructing steps applied according to embodiments of the invention;

Figures 5A and 5B: simulation results illustrating advantages of the inventive embodiments of the inventive wavefront reconstruction; and

Figures 6A to 6D: further illustrations of wavefront reconstructing steps applied according to embodiments of the invention; and

Figure 7: features of a wavefront measuring apparatus according to further embodiments of the invention.

Detailed description of preferred embodiments of the invention

Features of preferred embodiments of the invention are described in the following with particular reference to the combination of wavefront encoding, capturing three dimensional wavefront data by single shot compressive imaging and neural network based wavefront reconstruction. Details of components of the wavefront measuring apparatus or the operation thereof are not described as far as they are known per se from conventional techniques. For example, adjustment elements, imaging elements, like optical lenses, and/or relaying elements, like mirrors, may be provided as they are known from conventional optical setups. The design of the optical components, in particular the random coded mask used in compressive sensing, is not restricted to the described examples, but may be adapted to particular application conditions, e.g. by varying geometric dimensions and/or the number of transmissive pixels in a mask. The invention is described with exemplary reference to employing a lateral shearing interferometer for wavefront encoding. The invention is not restricted to this embodiment, but rather can be implemented with other wavefront encoding devices. Correspondingly, the compressive sensing and the application of neural networks can be modified, in particular as outlined below.

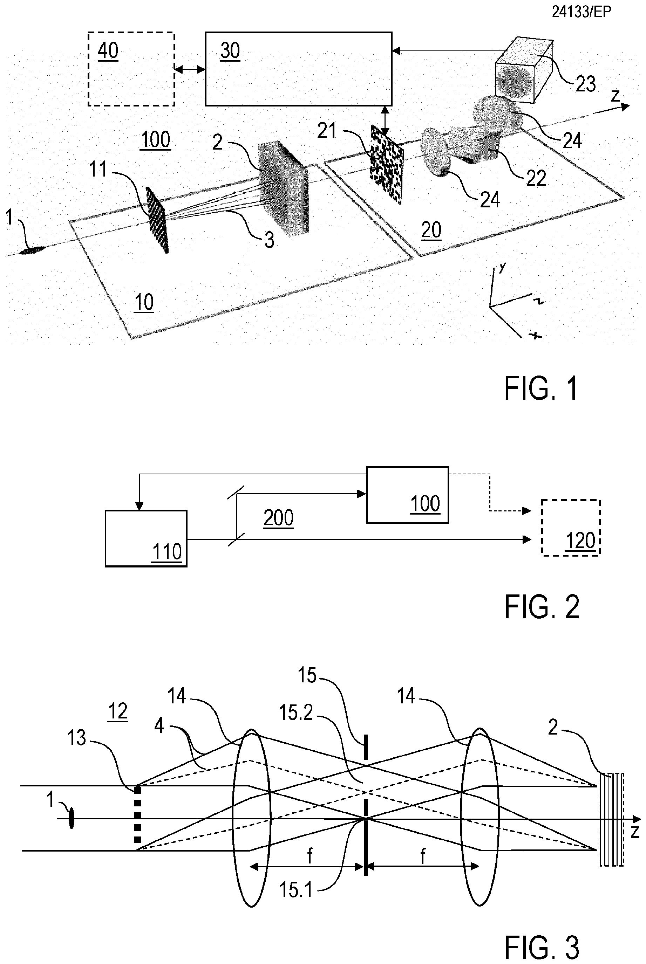

The wavefront measuring apparatus 100 of Figure 1 generally comprises a wavefront encoding device 10, a wavefront sensing device 20 and a wavefront reconstructing device 30, which are described in detail below. While these basic devices are shown as separate units, they can be integrated in a common setup, e.g., in a common casing and/or on a common carrier platform (not shown), in practical applications. The wavefront reconstructing device 30 preferably comprises a computer device, like one or more computer circuits with associated interfaces, input and output, which is arranged for receiving output signals from the wavefront sensing device 20. Additionally, the wavefront reconstructing device 30 may include a control device being adapted for controlling an adjustment of components of the wavefront encoding device 10 and/or the wavefront sensing devices 20 or of a laser source generating the light field to be measured (see Figure 3). Alternatively, the control device may be provided as a separate control circuit 40.

According to a preferred application of the invention, the wavefront measuring apparatus 100, e.g., according to Figure 1, is arranged for measuring the wavefront of laser pulses created by a laser source device 110, as schematically shown in Figure 2. An output of the wavefront measuring apparatus 100 may be used for controlling the laser source device 110, in particular for controlling at least one parameter of laser pulse generation, and/or may be supplied to an application site 120 of the laser pulses, e.g., for characterizing the laser pulses at the application site 120. A laser apparatus 200 comprising the laser source device 110 and the wavefront measuring apparatus 100 is considered as an independent subject of the invention.

Wavefront encoding device

The wavefront encoding device 10 comprises a lateral shearing interferometer (LSI), which is arranged for measuring the spatially varying phase of the light field 1. An LSI generally works by creating multiple copies of the light field 1 and shearing them laterally relative to each other before their interference pattern is captured on a sensor. Due to the shear, information about the spatial gradient of the wavefront is encoded in the interferogram [19]. Alternatively, another kind of wavefront retrieval technique can be applied, using e.g., a point-diffraction interferometer device (see Figure 3) or a Shack-Hartmann sensor.

The preferred implementation of the LSI is a quadriwave lateral shearing interferometer (QWLSI). By generating and shearing four (2 × 2) copies of the light field 1 with a two-dimensional phase grating 11 with pixels of alternating phase arranged in a checkerboard pattern [20], the QWLSI enables the extraction of two separate pairs of orthogonal gradients. Accordingly, two distinct estimates for the wavefront can be found, allowing error estimation. This property is highly desirable for the wavefront measuring apparatus 100 based on compressed sensing, if noise in the measurement could corrupt the wavefront with reconstruction artifacts. This could for instance be the case in a two-plane Gerchberg-Saxton algorithm. In contrast, redundancy of phase information in QWLSI provides direct validation and thus, makes the wavefront retrieval much more resilient to noise.

With more details, the phase grating 11 comprises a transparent carrier substrate, made of e. g., glass with a thickness of 150 $\mu$m and a matrix arrangement (so called checkerboard pattern) of grating pixels on the carrier substrate. The phase grating 11 is arranged for receiving the light field 1, like a laser pulse, to be measured travelling on a light propagation path (z-axis) and creating a hypercube 2 of interferograms. Preferably, the phase grating 11 is arranged perpendicular to the z-axis. The size of the grating pixels defines a pitch of the grating. Each grating pixel comprises a layer of dielectric material with a specific thickness, e. g. made of photosensitive polymer with a thickness in a range from 800 nm to 900 nm. The size of the grating pixels is selected to be equal to or larger than the size of the pixels of the light sensor 23 in the wavefront sensing device 20, e.g., with dimensions of 21.5 $\mu$m * 21.5 $\mu$m.

The creation of the hypercube 2 of interferograms mathematically can be described as follows, wherein the electric field $E_0$ of the light field 1 is represented by a laser pulse having a spatial-spectral intensity, $I_0$ and phase $\Phi_0$,

$$E_0(x, y, z = 0, \omega) = \sqrt{I_0(x, y, z = 0, \omega)} e^{i\phi_0(x, y, z = 0, \omega)} \tag{1}$$

The pulse is copied 4 times by the phase grating 11, and each copy's field is considered to propagate to a detector plane according as follows. For brevity, when the z index is not stated, z = 0 and the $\omega$ index will be suppressed from the electric field.

The propagation of each copy's field is described by considering the $j^{th}$ copy travelling a distance $\Delta z$, having a poloidal angle $\theta_j$ and an azimuthal angle $\zeta$, wherein one finds its displacement in the x and y directions to be:

$$\Delta x_j(\omega) = \Delta z \sin(\theta_j) \sin(\zeta(\omega))$$

$$\Delta y_j(\omega) = \Delta z \cos(\theta_j) \sin(\zeta(\omega))$$

In the QWLSI provided by the phase grating 11, the poloidal angles are $\theta_j \in [0, \pi/2, \pi, 3\pi/2]$. In Figure 1, one identifies the azimuthal angle, $\zeta$ as that between the lines 3 and the central z axis. This azimuthal angle is related to both the pitch of the grating $\Lambda$ and the wavelength $\lambda$ by

$$\zeta(\omega) = \arcsin\left(2\pi \frac{\lambda}{\Lambda}\right)$$

The resulting electric field $E_0$ of the copy is

$$E_j(x, y, \Delta z) = \frac{1}{4} \sqrt{I_0(x - \Delta x_j, y - \Delta y_j)} e^{i\phi_0(x - \Delta x_j, y - \Delta y_j)} \tag{2}$$

As diffraction occurs at an angle $\zeta$, the grating imparts a tilt onto the copy. This translates to an additional phase shift dependant on both the spectral and spatial domains,

$$\Delta\phi_j(x, y, \omega) = k(\omega)\left(x\cos(\theta_j) + y\sin(\theta_j)\right)\sin(\zeta)$$

where k = 2$\pi$ $\lambda$ is the wave-vector of the light field 1. This tilt is crucial in reconstruction as it provides a high frequency modulation that separates the gradients in Fourier space. Combining these two effects and summing over copies, the final changes to the field are obtained:

$$E(x, y, \Delta z) = \frac{1}{4} \sum_{j=1}^{4} \sqrt{I_0(x - \Delta x_j, y - \Delta y_j)}$$

$$\cdot e^{i(\phi(x - \Delta x_j, y - \Delta y_j) + \Delta \phi_j(x, y))} \tag{3}$$

At the Talbot self-imaging plane, $\Delta z = 2\Lambda^2/\lambda$, the hypercube 2 of interferograms encoding a phase of the wavefront by an intensity modulation in the optical plane and having spectral resolution within the optical plane is obtained as schematically shown in Figure 1. Conventionally, the hypercube would be collapsed onto a sensor at this point for retrieving the phase using standard Fourier methods. On the contrary, according to the invention, the spectrally-resolved phase is retrieved preferably by snapshot compressive imaging by the wavefront sensing device 20.

As an alternative to the phase grating 11, a point-diffraction interferometer device 12 can be used for creating the hypercube 2 of interferograms. An example of the point-diffraction interferometer device 12 configured as a self-referenced, common-path point-diffraction interferometer is shown in Figure 3. The point-diffraction interferometer device 12 comprises a grating 13, two imaging lenses 14 and a pinhole plate 15 arranged between the imaging lenses 14 at a common focal plane thereof. The pinhole plate 15 is made of a thin layer of an opaque material, like e.g chrome with a pinhole 15.1 on the optical axis (z axis) and a larger gap 15.2 outside the optical axis. The first order beam passes through the larger gap 15.2, wherein different frequency bands 4 are diffracted along different paths, while the pinhole 15.1 at 2f creates a spatially-filtered broadband reference. Both beams then interfere for forming the hypercube 2 of interferograms encoding a phase of the wavefront by an intensity modulation in the optical plane and spectral resolution is achieved using the subsequent combination with a mask and dispersive element, see 20 to 24 in Figure1.

Wavefront sensing device

Once the hypercube 2 of interferograms is created, the wavefront is extracted with the wavefront sensing device 20, wherein three dimensional wavefront data representing the wavefront are obtained by single shot compressive imaging.

The wavefront sensing device employs single shot compressive imaging of the hypercube of light patterns. Generally, compressed sensing (CS) describes the acquisition of a sparse signal from less samples than would classically be required according to the Nyquist theorem, by utilising optimisation methods to solve underdetermined equations. Snapshot compressive imaging (SCI) is an example of CS, capturing three dimensional data on a two dimensional sensor in a single shot. Generally, SCI works on the basis of two rules. First, the signal is sparse in some basis, and second, the signal is sampled in a basis that is incoherent with respect to the sparse basis (see e.g., [21]). The first rule is satisfied given the fact that e.g., laser wavefronts are known to be well-expressed with a few coefficients of the Zernike basis. The second rule is solved by performing random sampling. Whilst being trivial for two dimensional data, in the context of SCI it is challenging, as the 3D hypercube must be randomly sampled onto a 2D sensor. To do so, nearly all research in this area uses hardware based on the coded aperture snapshot compressive imaging (CASSI) device (see e.g., [22, 23]).

Accordingly, the wavefront sensing device 20 preferably comprises the coded aperture spectral imaging (CASSI) device, including a coded aperture 21, a dispersive medium 22, imaging optics 24 with two lenses, and a light sensor 23. The coded aperture 21 is e.g., a binary random mask with each pixel transmitting either 100% or 0% of the light. The coded aperture 21 is arranged perpendicular to the z-axis with a matrix pattern of variable density, e.g. 50 % opaque and 50 transparent pixels, e. g., made of a structured layer of chrome with a thickness of 10 nm on a glass substrate. The pixels have a characteristic dimension equal to multiples of the sensor 23 pixels, e.g. 3.45 $\mu$m. A sparse representation of the hypercube 2 of interferograms is transmitted to the dispersive medium 22, comprising e.g., a prism made of $CaF_2$ or other glasses or a grating, spectrally dispersing the hypercube 2 of light patterns and relaying it onto the light sensor 23. The light sensor 23 is e.g., a CMOS camera, preferably without colour sensitivity (black&white camera).

The hypercube 2 of interferograms is first imaged onto the coded aperture 21. After passing the coded aperture 21, a sparse representation of the hypercube 2 of interferograms is obtained, being characterized by an incomplete pattern of interferograms. The sparse cube is then passed through the dispersive medium 22 before being captured by the light sensor 23. The dispersed sparse hypercube of interferograms of the light field to be measured is the coded shot to be collected with the light sensor 23.

As the dispersive medium 22 is arranged in the Fourier imaging plane between the lenses of the imaging optics 24, varying an angle of incidence in the sparse hypercube 2 of interferograms results in a shifting in an imaging plane of the light sensor 23. Accordingly, spectral resolution is obtained in the wavefront data collected with the light sensor 23. Thus, the effect of the wavefront sensing device 20 is that when the sparse hypercube reaches the detector plane of the light sensor 23, each spectral channel is encoded with a different coded aperture, thereby approximating random sampling across the whole cube. This allows to retrieve the hypercube with a subsequent application of a reconstruction algorithm. In particular, the output of the light sensor 23 (in particular camera frame) provides the three dimensional wavefront data, on the basis of which the wavefront is reconstructed by the wavefront reconstructing device 30.

Wavefront reconstructing device

Known reconstruction methods usually involve multiple steps, i.e. extracting gradients, integrating and stitching them together. This can be a time consuming process, especially in a hyperspectral setting where the reconstruction has to be done for every spectral channel. To address this problem, the invention employs a neural network based, in particular a deep network based, approach to wavefront reconstruction for QLSI. While similar neural network applications have been described in the context of Shack Hartmann sensors (see [24, 25]), the inventors have applied the deep learning approach for the first time to the different problem given by the reconstruction based on wavefront data collected by compressive sensing, including the application of different training data and their generation.

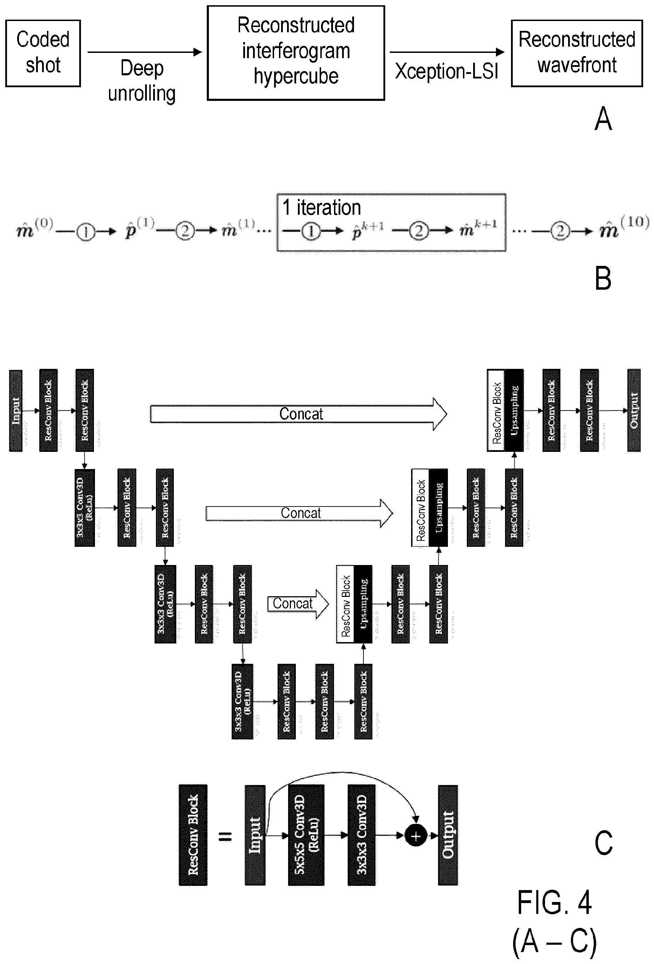

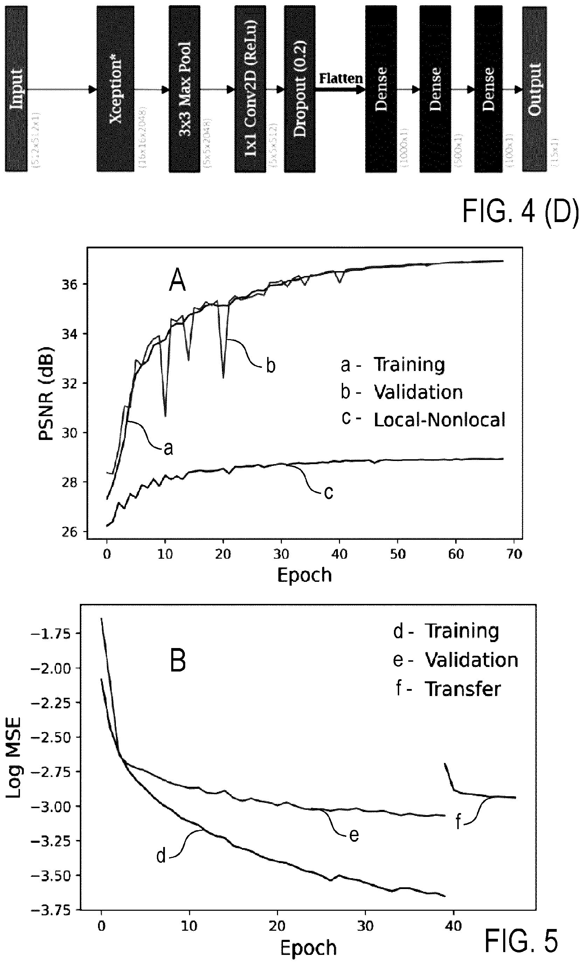

The full reconstruction process of the wavefront from the coded shot is described in the following with reference to Figures 4 and 5. Figure 4A is a general flow chart of the reconstruction process. Firstly, the deep unrolling algorithm performs reconstruction of the interferogram hypercube from the coded shot, and secondly another network, like e.g., Xception-LSI, reconstructs the spatial-spectral wavefront from the hypercube. Figure 4B illustrates the iterations of the deep unrolling process, wherein subproblems 1 and 2 (see equations (8) and (9) below) are solved recursively for 10 iterations. Figures 4C and 4D show the neural network structure used to represent $S(m^k)$. Figure 4E illustrates the network design for the Xception-LSI network, wherein the Xception* block represents that the last two layers were stripped from a conventional Xception network. Figures 5A and 5B show examples of training curves for the deep unrolling algorithm and the Xception-LSI.

For the following mathematical description of the wavefront sensing device 20 and the subsequent reconstruction, the wavefront sensing device 20 is simulated by multiplying the hypercube 2 of interferograms by the coded aperture 21, then shifting the channels of the cube according to the amount of (angular) dispersion imparted onto them by the dispersive medium 22, and finally summing over the spectral axis.

Mathematically, the wavefront sensing device 20 (CASSI device) is summarized into a matrix $\Phi$, which operates on m, a vectorized representation of the hypercube, to give $n$, a vectorized coded shot, according to

$$n = \Phi m. \tag{4}$$

In order to reconstruct m, one can solve

$$\tilde{m} = \mathrm{argmin}_m \left[ \underbrace{\|n - \Phi m\|^2}_{\text{data term}} + \underbrace{\eta\mathcal{R}(m, \psi)}_{\text{regularizer}} \right] \tag{5}$$

The first term on the right hand side is labelled the data term, and enforces that the hypercube must match the coded shot when captured. This alone would be an underdetermined system, so a regularization term, parameterised by $\psi$, is added which restricts the solution space and selects the correct hypercube to be retrieved.

Most methods that have been developed to solve this non-convex equation can be sorted into two classes: iterative algorithms or end-to-end neural networks. The former offers good generalisation but lacks abstraction capability and is slow, whilst deep networks are fast and have been shown to learn almost any function, but can be prone to overfitting (see [26]). A middle ground that offers high performance is deep unrolling.

While an end-to-end neural network would attempt to solve equation (5) directly, if it were possible to split the equation, the data term can actually be solved analytically. This is desirable as it alleviates an abstraction to be done by the network resulting in greater generalisation and better parameter efficiency. To perform such a separation, half quadratic splitting is employed. First an auxiliary variable p is substituted into the regularization term, with equation (6) being equivalent to equation (5). Then, the constraint is relaxed and replaced by a quadratic loss term,

$$\hat{m}, \hat{p} = \mathrm{argmin}_{m,p} \left[ |n - \Phi m|^2 + \eta R(p) \right] \text{ s.t. } m = p, \tag{6}$$

$$\approx \operatorname{argmin}_{m,p} \left[ |\boldsymbol{n} - \boldsymbol{\Phi m}|^2 + \eta R(\boldsymbol{p}) + \beta |\boldsymbol{m} - \boldsymbol{p}|^2 \right] \tag{7}$$

Here, $\beta$ is a variable that controls the strength of the constraint. High values of $\beta$ will strongly enforce $\boldsymbol{m} = \boldsymbol{p}$ and approximate the subject-to statement. The benefit of this problem formulation is that it is then possible to split equation (7) into two minimization subproblems in $\boldsymbol{m}$ and $\boldsymbol{p}$, and effectively separate the data term from the regularization term. When minimized iteratively, the following sub-problems can approximate equation (7):

$$\hat{\boldsymbol{p}}^{k+1} = \operatorname{argmin}_p \left[ \beta |\boldsymbol{p} - \boldsymbol{m}^k|^2 + \eta R(\boldsymbol{p}) \right] \approx \mathcal{S}(\boldsymbol{m}^k) \tag{8}$$

$$\hat{\boldsymbol{m}}^{k+1} = \operatorname{argmin}_m \left[ |\boldsymbol{n} - \boldsymbol{\Phi m}|^2 + \beta |\boldsymbol{p}^{k+1} - \boldsymbol{m}|^2 \right] \tag{9}$$

Equation (9) is a convex equation and can be solved via a conjugate gradient algorithm which provides better stability than solving analytically. 5 on the right-hand side of equation (8) represents that a deep unrolling neural network is used to solve the equation.

The deep unrolling process for reconstructing the hypercube of interferograms (Figure 4A) is shown in Figures 4B to 4D. Firstly $\boldsymbol{m}(0)$ is initialized: $m^{(0)} = \Phi^T n$. Then the two equations (8) and (9) are solved for a fixed number of iterations, with the same architecture neural network being used to represent equation (8) in each iteration. However, the network has its own set of weights for each iteration, hence the unrolling of the algorithm. Preferably, up to 10 iterations are used for the reconstruction, as it has been found that adding more than this produces negligible performance gains (see [29]).

As mentioned above, the neural network, S, represents the regularization term. This means one can exploit prior knowledge about the data to choose a suitable architecture. Spatio-temporal couplings can be described by a correlation between Zernike polynomial coefficients and wavelength. Accordingly, there will likely be strong similarity in spot positions for neighbouring spectral channels. Due to this, an architecture with 3D convolutions is employed, which can exploit these relations. By further developing recent work in video snapshot compressive imaging (see [27]), a simplified ResUNet architecture is preferably chosen (see [28]) with the conventionally used 2D convolutions replaced with 3D ones, as shown in Figure 4C.

As a result of the application of the ResUNet network of Figure 4C, an approximation of the complete hypercube of interferograms is obtained, which is used for reconstructing the wavefront of the light field 1 to be measured.

Reconstructing the wavefront is executed with a wavefront retrieval network that takes a single spectral channel QWLSI interferogram and predicts the spatial wavefront in terms of Zernike coefficients. The network preferably is based on the Xception network (see [30]) but as the original 71-layer network is designed for classification, some changes are made to adapt Xception to the present embodiment, as shown in Figure 4D. The modified network is called Xception-LSI. Firstly, the final 2 layers are removed. The Xception* block represents that the last two layers were stripped from the conventional Xception network. A max pool layer and a convolutional layer are added to shrink the output in the spatial and spectral dimensions respectively. Dropout is applied before using 3 dense layers with 1000, 500 and 100 nodes using the relu activation function (see [31]). The output layer consists of 15 nodes with linear activation, corresponding to the number of Zernike coefficients to predict.

Training and testing

For training and testing purposes, a total of 300 hypercubes of light fields were generated with dimensions ($n_x \times n_y \times n_\omega$) = (512 $\times$ 512 $\times$ 31) to represent the initial pulse of the light field 1 (Figure 1). The data was randomly split at a ratio of 4 : 1 : 1 into training, validation and test sets, respectively. The wavelength range considered was 750 nm to 850 nm, representing a broadband Ti:Sapphire Laser, giving $\Delta\lambda \approx 3.23$ nm. For each hypercube, the wavefront for each channel was first initialised to a randomly weighted sum of 15 Zernike basis functions. Then, to simulate an STC, one Zernike function was chosen and was made to vary either linearly or quadratically with frequency. Indeed, common STCs such as pulse front tilt and pulse front curvature can be represented in this way (see [1]). The mean amplitude of this coefficient was also made to be higher. This choice of Zernike coefficients is arbitrary, but allows for a demonstration that the method can identify all Zernike basis functions. The intensity of slices of the hypercube were set to an image taken of a real laser intensity. Each cube was then processed according to Figures 1 and 4.

Firstly, it was passed through the QWLSI simulation (see above), yielding a hypercube of interferograms - these are the training labels for the deep unrolling algorithm. This hypercube was then passed through the SCI simulation, yielding a coded shot - the training data. The interferogram hypercube was reconstructed via deep unrolling, before being passed into the Xception-LSI network to predict the spectral Zernike coefficients. The pitch of the lateral shearing interferometer was set to $\Lambda = 80 \mu$m, and the dispersion of the prism, measured at the camera plane, was set to 1 pixel per channel (each channel having a width of 3.23 nm). Before being passed through the deep unrolling network, the cubes and coded shots were split spatially into $64 \times 64$ oblique parallelepiped patches, allowing for a one-to-one reconstruction between the input and output (see [29]). The initial learning rate was set to 0.01 and decayed by 10% every 5 epochs. The total number of epochs was 70, and the batch size was 8.

The Xception-LSI network was fed individual channels of the ground truth interferogram hypercubes and predicted Zernike coefficient polynomials. Normal random noise ($N(\mu = 0, \sigma = 0.1)$) was applied to the input, to make the model robust to noise produced by the SCI reconstruction. The initial learning rate was set to $10^{-5}$ and decayed by 10% every 5 epochs. The total number of epochs was 40, and the batch size was 16. Once trained on the ground truth hypercubes, the model was trained on interferogram hypercubes that had been reconstructed by deep unrolling, for a further 8 epochs. The aim of this transfer learning was to allow the network to account for any systematic noise in the SCI reconstruction, resulting in a more accurate wavefront reconstruction.

Figure 5A shows the training curve for the deep unrolling algorithm demonstrating the superior power of 3D convolutions in this embodiment. Plotted is the training and validation peak-signal-to-noise-ratio (PSNR) for the 3D ResUNet prior that was used, as well as the validation score for a local-nonlocal prior (see [32]). Figure 5A demonstrates that it is indeed possible to reconstruct the hypercube of light patterns sensed with SCI. When both architectures were used with 10 iterations of unrolling, the 3D convolutional model achieved a far superior PSNR of 36 compared to 29. Furthermore, it contains ~45% less parameters.

Figure 5B shows the training curve for Xception-LSI for training and validation sets, with the loss shown in log mean squared error. Also plotted is the validation loss when further training the model on the deep unrolling reconstruction of the data (Transfer). The additional transfer learning proves to be extremely effective in reducing the error of the wavefront predictions when working with reconstructed interferogram hypercubes. In order to reconstruct the wavefront for a full hypercube, each spectral channel is fed through the network sequentially. The final mean squared error on the reconstructed test set was $9.18 \times 10^{-4}$.

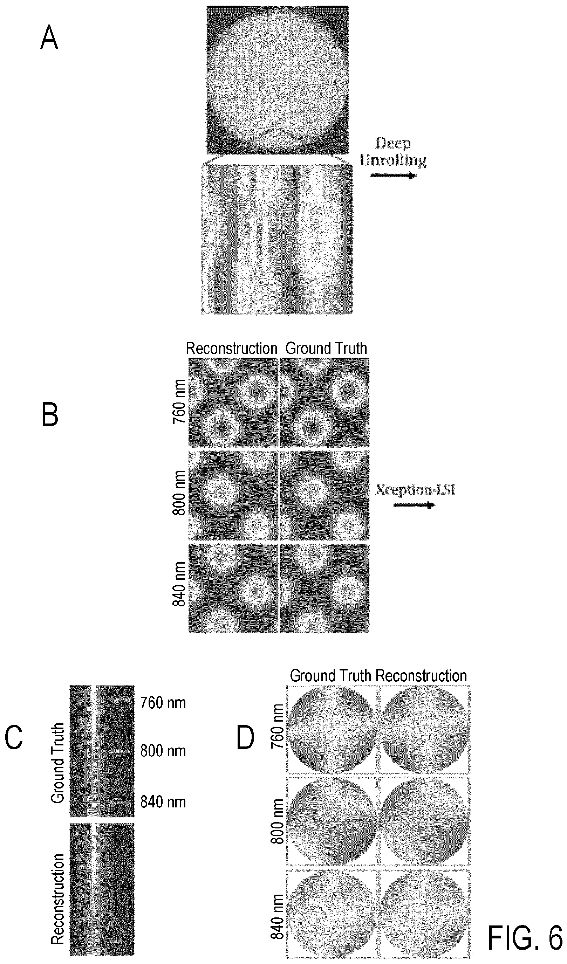

An example of the full reconstruction process, from coded shot to spatial-spectral wavefront, is displayed in Figure 6, wherein color-coded data are printed as grey scale values for technical reasons. Figure 6A shows an example of the coded shot, along with a zoomed section, and Figure 6B shows the deep unrolling reconstruction of the interferogram hypercube in the same zoomed section at different wavelength slices. Figure 6C shows the Xception-LSI reconstruction of the spatio-spectral wavefront displayed in terms of Zernike coefficients, where the x-axis of each plot is the Zernike function, the y-axis is the wavelength and the greyscale value represents the value of the coefficient. Figure 6D illustrates the spatial wavefront resulting from a Zernike basis expansion of the coefficients in Figure 6C at the labelled spectral channels.

In practical applications of the invention, training of the networks of Figure 4 can be done on the basis of simulation training data or measured training data.

Further modified embodiments

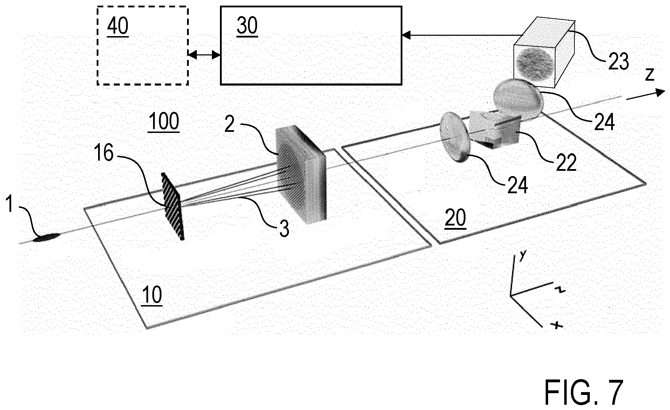

Features of the embodiments illustrated in Figures 1 to 6 can be modified as described in the following, in particular with reference to Figures 1 and 7. Figure 7 shows another embodiment of the wavefront measuring apparatus 100 with a wavefront encoding device 10, a wavefront sensing device 20 and a wavefront reconstructing device 30, optionally with a separate control circuit 40, as shown in Figure 1. Equal components are indicated with equal reference numerals.

According to a first modification, the CASSI device of Figure 1 is replaced by a combined wave-front encoding and sensing device 10, 20 as shown in Figure 7. The CASSI device of Figure 1 is based on the concept that the spatial distribution of the signal is sparse in some domain and that it is preferably sampled in a random fashion to endure an incoherent measurement. Using a typical density of 50% opaque and 50% transparent pixels, this method is also quite efficient in terms of light usage, especially compared to filter-based methods. However, in light field, in particular laser pulse, characterization the signal level is typically less of a concern than in e.g. conventional environmental hyperspectral imaging. In particular, high-power lasers usually even have to be attenuated before being measured by diagnostics. Furthermore, due to their optimization for the beam quality factor $M^2$, laser signals have by design less high-frequency components than real-world images. As such, they are spatially more sparse.

These particular features allow to replace the combination of the checkerboard grating 11 and the coded random mask 21 of Figure 1 with a single regular Hartmann mask 16 of Figure 7. The Hartmann mask 16 is placed at the same position like the checkerboard grating 11, and it comprises a transparent substrate with a structure opaque layer defining a matrix of transparent pixels. As an example, the Hartmann mask 16 comprises a chrome-coated glass substrate - analogous to the coded mask 21 - with pixel-sized pinholes (3.5 $\mu$m $\times$ 3.5 $\mu$m) in a regular 2-D grid with a typical spacing $\Lambda$ of 25 $\mu$m. Like the checkerboard phase grating, the Hartmann mask 16 is self-imaged after the Talbot distance $\Delta z = 2\Lambda^2/\lambda$, where $\Lambda$ is the spacing between pinholes in the Hartmann mask 16.

The Hartmann mask creates a sparse hypercube 2 of light patterns (grid dots) instead of a sinosoidal intensity pattern created by the phase grating. However, like the phase mask 11, the Hartmann mask 16 encodes phase information. By tilting the Hartmann mask with respect to the dispersion axis, the dispersed copies of the mask's pinholes have little overlap, facilitating reconstruction in the subsequent neural-network-based analysis. The sparse hypercube 2 of light patterns is imaged via the dispersing medium 22, like a transmission grating, to the light sensor 23 for providing the wavefront data, reconstructing the hypercube and reconstructing the wavefront, as described above.

According to a second, alternative or additional modification, the transmission grating 22 may comprise a transmissive polarization grating that creates two diffracted beams of the +1 and -1 orders. The diffracted beams correspond to the right-handed and left-handed polarization components of the light field 1 to be measured. In this configuration, the wavefront measuring apparatus 100 is also sensitive to the polarization of the light field 1.

The polarization grating 22 comprises e.g., a thin glass or plastic substrate with a thickness in a range from 100 $\mu$m to 1 mm and with a holographic layer consisting of fixated nematic liquid crystals (see e. g., [33]).

According to a third, alternative or additional modification, a deconvolution with a spatially varying point spread function (PSF) of the wavefront encoding and/or sensing devices 10, 20 is applied on the wavefront data for accounting for non-ideal imaging. Any real-world imaging system is subject to blur as one approaches the optical resolution of the system. This blur limits the final resolution of the image, even if the pixel resolution of the detector is higher. For circumventing this issue and increasing the detector resolution beyond this limit, the deconvolution with the PSF is applied as follows.

Mathematically, the CASSI device 20 of Figure 1 or the wavefront encoding and sensing devices 10, 20 of Figure 7 are summarized into a forward matrix **A**, which operates **on x,** a vectorized representation of the hypercube, to give **y,** a vectorized coded and dispersed shot sensed with the light sensor 23. In order to reconstruct **x,** the equation (5) (see above) is to be solved.

Mathematically, the blur can be described as a convolution of the original signal $x$ with the PSF (blur matrix **B**). The PSF is not uniform, but changes as a function of position. The blur and dispersion can be modelled as two sequentially occurring processes, in which case the inverse problem takes the form

$$y = ABx \tag{10}$$

This problem can be divided into the two sub-problems, namely the classic CASSI problem of removing dispersion

$$y = A\tilde{x}$$

and the problem of removing blur

$$\tilde{x} = Bx \tag{11}$$

Here, $x$ is the un-dispersed hypercube to be recostructed, whereas $\tilde{x}$ are the un-dispersed hypercubes with blur. Inverting equation (11) is a deconvolution problem with spatially-varying PSF.

By measuring data using a known coded aperture, as described above, and comparing the measurement with the actual observation, one can learn how to deconvolve the measurement and retrieve the desired high-resolution image.

Tests of the inventors have shown that a convolution neural network architecture, e.g., a network known as CoordConv (see [34]), is particularly suitable for this task. In particular CoordConv is essentially a normal convolution neural network with two additional input channels containing the positions of each pixel.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

**Claims**

1.  Wavefront measuring apparatus (100), being configured for sensing a light field (1), in particular of laser pulses, travelling along an optical axis (z) and having a lateral extension parallel to an optical plane (x-y) perpendicular to the optical axis, and for reconstructing a wavefront of the light field (1) with spatial and spectral resolution in the optical plane, comprising

    - a wavefront encoding device (10) being configured for receiving the light field (1) to be measured and for creating a hypercube (2) of light patterns encoding a phase of the wavefront by an intensity modulation in the optical plane and having spectral resolution within said optical plane,
    - a wavefront sensing device (20) being configured for capturing three dimensional wavefront data by single shot compressive imaging of the hypercube (2) of light patterns with a two dimensional light sensor (23), and
    - a wavefront reconstructing device (30) being configured for a neural network based reconstruction of the wavefront of the light field (1) from the wavefront data.

2.  Wavefront measuring apparatus according to claim 1, wherein

    - the wavefront encoding device (10) comprises a lateral shearing interferometer device or a point-diffraction interferometer device and the light patterns comprise interferograms.

3.  Wavefront measuring apparatus according to claim 2, wherein

    - the wavefront encoding device (10) is the lateral shearing interferometer device, which is configured as a quadriwave lateral shearing interferometer (QWLSI).

4.  Wavefront measuring apparatus according to claim 1, wherein

    - the wavefront encoding device (10) comprises a Shack-Hartmann sensor device and the light patterns comprise light spots created by the Shack-Hartmann sensor device.

5.  Wavefront measuring apparatus according to one of the foregoing claims, wherein

    - the wavefront sensing device (20) comprises a coded aperture spectral imaging device (CASSI), including a coded aperture (21), a dispersive medium (22) and the light sensor (23), wherein the coded aperture (21) comprises a random mask extending perpendicular within the optical plane and transmitting the hypercube (2) of light patterns to the dispersive medium (22) and the dispersive medium (22) is arranged for spectrally dispersing the hypercube (2) of light patterns onto the light sensor (23).

6.  Wavefront measuring apparatus according to claim 1, wherein

    - the wavefront sensing device (20) comprises a dispersive medium (22) and the light sensor (23), and
    - the wavefront encoding device (10) comprises a random Hartmann mask being arranged with a tilt relative to a dispersion axis of the dispersive medium (22), wherein
    - the Hartmann mask is arranged for transmitting the hypercube (2) of light patterns to the dispersive medium (22) and the dispersive medium (22) is arranged for spectrally dispersing the hypercube (2) of light patterns onto the light sensor (23).

7.  Wavefront measuring apparatus according to one of the foregoing claims, wherein the wavefront reconstructing device (30) is configured for reconstructing the wavefront of the light field (1) from the wavefront data by at least one of

    - reconstructing the hypercube (2) of light patterns by applying a deep unrolling regularization on the wavefront data, and
    - reconstructing the wavefront of the light field (1) from the reconstructed hypercube (2) of light patterns by an application of at least one neural network on the reconstructed hypercube (2) of light patterns.

8.  Wavefront measuring apparatus according to claim 7, wherein

    - the deep unrolling regularization is executed with a ResUNet network (31) using 3D convolutional layers, and/or

- the wavefront of the light field (1) is reconstructed by an application of a residual convolutional network (32) on the reconstructed hypercube (2) of light patterns.

9. Wavefront measuring apparatus according to one of the foregoing claims, wherein

- the wavefront reconstructing device (30) is configured for validating the reconstructed wavefront of the light field (1) by using redundancy of phase information included in the hypercube (2) of interferograms.

10. Wavefront measuring method for sensing a light field (1), in particular of laser pulses, travelling along an optical axis (z) and having a lateral extension parallel to an optical plane (x-y) perpendicular to the optical axis, and for reconstructing a wavefront of the light field (1) with spatial and spectral resolution in the optical plane, comprising the steps of

- receiving the light field (1) to be measured and creating a hypercube (2) of light patterns encoding a phase of the wavefront by an intensity modulation in the optical plane and having spectral resolution within said optical plane,
- capturing three dimensional wavefront data by single shot compressive imaging of the hypercube (2) of light patterns, and
- reconstructing the wavefront of the light field (1) from the wavefront data by a neural network based reconstruction process.

11. Wavefront measuring method according to claim 10, wherein

- the light patterns comprise interferograms created by a lateral shearing interferometer device or a point-diffraction interferometer device or light spots created by a Shack-Hartmann sensor device.

12. Wavefront measuring method according to one of the claims 10 to 11, wherein

- the three dimensional wavefront data is captured with a coded aperture spectral imaging device (CASSI), including a coded aperture (21), a dispersive medium (22) and a light sensor (23), wherein the coded aperture (21) comprises a random mask extending perpendicular within the optical plane and transmitting the hypercube (2) of light patterns to the dispersive medium (22) and the dispersive medium (22) spectrally disperses the hypercube (2) of light patterns onto the light sensor (23).

13. Wavefront measuring method according to one of the claims 10 to 12, wherein the wavefront of the light field (1) from the wavefront data is reconstructed by

- reconstructing the hypercube (2) of light patterns by applying a deep unrolling regularization on the wavefront data, and
- reconstructing the wavefront of the light field (1) from the reconstructed hypercube (2) of light patterns by an application of at least one neural network on the reconstructed hypercube (2) of light patterns.

14. Wavefront measuring method according to claim 13, wherein

- the deep unrolling regularization is executed with a ResUNet network using 3D convolutional layers, and/or
- the wavefront of the light field (1) is reconstructed by an application of a residual convolutional network on the reconstructed hypercube (2) of light patterns.

15. Wavefront measuring method according to one of the claims 10 to 14, including

- validating the reconstructed wavefront of the light field (1) by using redundancy of phase information included in the hypercube (2) of interferograms.

16. Method of using the wavefront measuring apparatus according to one of the claims 1 to 9 or the wavefront measuring method according to one of the claims 10 to 15 for at least one of

- diagnostic of ultrashort laser pulses,
- feedback-control of creating ultrashort laser pulses, and

- quantitative phase imaging.

24133/EP

FIG. 1

FIG. 2

FIG. 3

$$\hat{m}^{(0)} \longrightarrow \text{①} \longrightarrow \hat{p}^{(1)} \longrightarrow \text{②} \longrightarrow \hat{m}^{(1)} \cdots \boxed{\begin{array}{c} \text{1 iteration} \\ \longrightarrow \text{①} \longrightarrow \hat{p}^{k+1} \longrightarrow \text{②} \longrightarrow \hat{m}^{k+1} \end{array}} \cdots \longrightarrow \text{②} \longrightarrow \hat{m}^{(10)}$$

B

C

FIG. 4
(A – C)

FIG. 4 (D)

FIG. 5

FIG. 6

FIG. 7

Europäisches
Patentamt

European
Patent Office

Office européen
des brevets

# EUROPEAN SEARCH REPORT

Application Number

EP 23 16 0204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PENG JIA ET AL: "Compressive Shack-Hartmann Wavefront Sensing based on Deep Neural Networks", ARXIV.ORG, CORNELL UNIVERSITY LIBRARY, 201 OLIN LIBRARY CORNELL UNIVERSITY ITHACA, NY 14853, 20 November 2020 (2020-11-20), XP081818550, * figure 1 * * page 2, left-hand column, paragraph 2 * * page 3, left-hand column, last paragraph * ----- | 1,4,7,8, 10,11, 13,14,16 | INV. G01J9/00 G01J9/02 |
| Y | SPENCER W JOLLY ET AL: "Spatio-temporal characterization of ultrashort laser beams: a tutorial", JOURNAL OF OPTICS, INSTITUTE OF PHYSICS PUBLISHING, BRISTOL GB, vol. 22, no. 10, 15 September 2020 (2020-09-15), page 103501, XP020357480, ISSN: 2040-8986, DOI: 10.1088/2040-8986/ABAD08 [retrieved on 2020-09-15] * figures 13b,13c * * page 16, left-hand column, last paragraph * ----- -/-- | 1,2,4-16 | TECHNICAL FIELDS SEARCHED (IPC) G01J |

The present search report has been drawn up for all claims

| Place of search | Date of completion of the search | Examiner |
|---|---|---|
| Munich | 21 August 2023 | Jacquin, Jérôme |

Europäisches
Patentamt

European
Patent Office

Office européen
des brevets

# EUROPEAN SEARCH REPORT

Application Number

EP 23 16 0204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG LIZHI ET AL: "DNU: Deep Non-Local Unrolling for Computational Spectral Imaging", 2020 IEEE/CVF CONFERENCE ON COMPUTER VISION AND PATTERN RECOGNITION (CVPR), IEEE, 13 June 2020 (2020-06-13), pages 1658-1668, XP033805209, DOI: 10.1109/CVPR42600.2020.00173 [retrieved on 2020-08-03] * page 2, left-hand column, paragraph 1 * * page 3, left-hand column, paragraph 1 - page 4, right-hand column, last paragraph * * figure 2 * | 1-16 | |
| Y | WANG LIZHI ET AL: "Hyperspectral Image Reconstruction Using a Deep Spatial-Spectral Prior", 2019 IEEE/CVF CONFERENCE ON COMPUTER VISION AND PATTERN RECOGNITION (CVPR), IEEE, 15 June 2019 (2019-06-15), pages 8024-8033, XP033687126, DOI: 10.1109/CVPR.2019.00822 [retrieved on 2020-01-08] * figure 1 * * page 2, left-hand column, paragraph 1 - page 4, left-hand column, last paragraph * * page 5, left-hand column, last paragraph * | 1-16 | TECHNICAL FIELDS SEARCHED (IPC) |

-/--

The present search report has been drawn up for all claims

| Place of search | Date of completion of the search | Examiner |
|---|---|---|
| Munich | 21 August 2023 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 16 0204

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DORRER C. ET AL: "Spatio-spectral characterization of broadband fields using multispectral imaging", OPTICS EXPRESS, vol. 26, no. 25, 7 December 2018 (2018-12-07), page 33387, XP093074114, DOI: 10.1364/OE.26.033387 Retrieved from the Internet: URL:https://www.osapublishing.org/viewmedia.cfm?URI=oe-26-25-33387> * figure 3a * * pages 7,10 * | 1-5,7-16 | |
| Y | BAHK S.-W. ET AL: "Multispectral Wavefront Sensing for Characterizing Spatiotemporal Coupling in Ultrashort Pulses", IMAGING AND APPLIED OPTICS 2018, 1 January 2018 (2018-01-01), page JW5E.4, XP093074122, DOI: 10.1364/3D.2018.JW5E.4 ISBN: 978-1-943580-44-6 * figure 1b * | 1-3,5, 7-16 | |
| A | TANG XIN ET AL: "Reliable wavefront reconstruction from a single lateral shearing interferogram using Bayesian convolutional neural network", OPTICS AND LASERS IN ENGINEERING, vol. 160, 1 January 2023 (2023-01-01), page 107281, XP093068903, AMSTERDAM, NL ISSN: 0143-8166, DOI: 10.1016/j.optlaseng.2022.107281 * the whole document * | 7,8,13, 14 | |

TECHNICAL FIELDS SEARCHED (IPC)

-/--

The present search report has been drawn up for all claims

| Place of search | Date of completion of the search | Examiner |
|---|---|---|
| Munich | 21 August 2023 | Jacquin, Jérôme |

EPO FORM 1503 03.82 (P04C01)

page 3 of 4

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim |
|---|---|---|
| A | HU GU ET AL:  "High-precision wavefront reconstruction from Shack-Hartmann wavefront sensor data by a deep convolutional neural network", MEASUREMENT SCIENCE AND TECHNOLOGY, IOP, BRISTOL, GB, vol. 32, no. 8, 11 May 2021 (2021-05-11), page 85101, XP020367927, ISSN: 0957-0233, DOI: 10.1088/1361-6501/ABF708 [retrieved on 2021-05-11] * the whole document * ----- | 7,8,13, 14 |

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| Munich | 21 August 2023 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. JOLLY et al.** Spatio-temporal characterization of ultrashort laser beams: a tutorial. *Journal of Optics,* August 2020, vol. 22
- **A. JEANDET et al.** Survey of spatio-temporal couplings throughout high-power ultrashort lasers. *Opt. Express,* January 2022, vol. 30, 3262-3288
- **C. BOURASSIN-BOUCHET et al.** Duration of ultrashort pulses in the presence of spatio-temporal coupling. *Opt. Express,* August 2011, vol. 19, 17357-17371
- **D. H. FROULA et al.** Flying focus: Spatial and temporal control of intensity for laser-based applications. *Physics of Plasmas,* 2019, vol. 26 (3), 032109
- **C. CAIZERGUES et al.** Phase-locked laser-wakefield electron acceleration. *Nature Photon.,* 2020, vol. 14 (8), 475-479
- **R. ABOUSHELBAYA.** Orbital angular momentum in high-intensity laser interactions. *Thesis, University of Oxford,* 2020
- **P. BOWLAN et al.** Crossed-beam spectral interferometry: a simple, high-spectral-resolution method for completely characterizing complex ultrashort pulses in real time. *Opt. Express,* November 2006, vol. 14, 11892-11900
- **M. LOPEZ-RIPA et al.** Bulk lateral shearing interferometry for spatiotemporal study of time-varying ultrashort optical vortices. *Photon. Res.,* April 2022, vol. 10, 922-931
- **S. L. COUSIN et al.** Three-dimensional spatiotemporal pulse characterization with an acousto-optic pulse shaper and a hartmann shack wavefront sensor. *Opt. Lett.,* August 2012, vol. 37, 3291-3293
- **G. PARIENTE et al.** Space-time characterization of ultra-intense femtosecond laser beams. *Nature Photonics,* 2016, vol. 10, 547-553
- **P. GABOLDE et al.** Single-shot measurement of the full spatio-temporal field of ultrashort pulses with multi-spectral digital holography. *Opt. Express,* November 2006, vol. 14, 11460-11467
- **A. BOROT et al.** Spatio-spectral metrology at focus of ultrashort lasers: a phase-retrieval approach. *Opt. Express,* October 2018, vol. 26, 26444-26461
- **W. P. LEEMANS.** Bella laser and operations. *Proceedings of PAC2013, Pasadena, CA USA THYAA1,* 2013
- **A. JEANDET et al.** Spatio-temporal structure of a petawatt femtosecond laser beam. *Journal of Physics: Photonics,* June 2019, vol. 1, 035001

- **R. W. GERCHBERG.** A practical algorithm for the determination of phase from image and diffraction plane pictures. *Optik,* 1972, vol. 35, 237-246
- **E. GRACE et al.** Complete, single shot, spatiotemporal measurement of a terawatt laser system. *Frontiers in Optics / Laser Science,* 2020
- **Z. GUANG et al.** Complete characterization of a spatiotemporally complex pulse by an improved single-frame pulse-measurement technique. *J. Opt. Soc. Am. B,* November 2014, vol. 31, 2736-2743
- **A. S. MACHIKHIN et al.** *J. Opt,* 2017, vol. 19, 075301
- **C. BA et al.** Fast hyperspectral phase and amplitude imaging in scattering tissue. *Opt. Lett,* 2018, vol. 43, 2058-2061
- **S. VELGHE et al.** Wave-front reconstruction from multidirectional phase derivatives generated by multilateral shearing interferometers. *Opt. Lett.,* February 2005, vol. 30, 245-247
- **S. VELGHE et al.** Advanced wavefront sensing by quadri-wave lateral shearing interferometry. *Proc. SPIE,* 2006, vol. 6292, 117-129
- **E. J. CANDES.** The restricted isometry property and its implications for compressed sensing. *Comptes rendus mathematique,* 2008, vol. 346 (9-10), 589-592
- **M. E. GEHM et al.** Single-shot compressive spectral imaging with a dual-disperser architecture. *Opt. Express,* October 2007, vol. 15, 14013-14027
- **A. WAGADARIKAR et al.** Single disperser design for coded aperture snapshot spectral imaging. *Appl. Opt.,* April 2008, vol. 47, B44-B51
- **L. HU et al.** Learning-based shack-hartmann wavefront sensor for high-order aberration detection. *Opt. Express,* November 2019, vol. 27, 33504-33517
- **L. HU et al.** Deep learning assisted shack-hartmann wavefront sensor for direct wave-front detection. *Opt. Lett.,* July 2020, vol. 45, 3741-3744
- **X. YUAN et al.** *Snapshot compressive imaging: Principle, implementation, theory, algorithms and applications,* 2021
- **Z. WU et al.** Dense deep unfolding network with 3d-cnn prior for snapshot compressive imaging. *arXiv:2109.06548,* 2021
- **Z. ZHANG et al.** Road extraction by deep residual u-net. *IEEE Geoscience and Remote Sensing Letters,* May 2018, vol. 15, 749-753

- **L. WANG et al.** Hyperspectral image reconstruction using a deep spatial-spectral prior. *IEEE Xplore,* 2019, 8024-8033
- **F. CHOLLET.** Xception: Deep learning with depthwise separable convolutions. *arXiv:1610.02357,* 2016
- **A. F. AGARAP.** Deep learning using rectified linear units (ReLu). *arXiv:1803.08375,* 2018
- **L. WANG et al.** Dnu: Deep non-local unrolling for computational spectral imaging. *IEEE Xplore,* June 2020
- **C. OH et al.** Achromatic diffraction from polarization gratings with high efficiency. *Optics letters,* 2008, vol. 33 (20), 2287-2289
- **R. LIU et al.** An intriguing failing of convolutional neural networks and the coordconv solution. *Advances in neural information processing systems 32nd Conference on Neural Information Processing System,* 2018